# EUROPÄISCHE PATENTSCHRIFT

(11) **EP 2 985 493 B1**
(45) Veröffentlichungstag und Bekanntmachung des Hinweises auf die Patenterteilung: **21.02.2018**
(21) Anmeldenummer: 15002226.7
(22) Anmeldetag: 09.12.2009
(51) Int. Cl.: F16H 57/08

(54) **GUSSTEIL, PLANETENTRÄGER, HOHLWELLE UND PLANETENGETRIEBE**
CAST PART, PLANET CARRIER,HOLLOW SHAFT,PLANETARY GEAR
PIÈCE MOULÉE,PORTE-SATELLITES,ARBRE CREUX,TRANSMISSION PLANETAIRE

(30) Priorität: 15.12.2008 DE 102008061902; 24.09.2009 DE 102009042585
(43) Veröffentlichungstag der Anmeldung: 17.02.2016
(62) Teilanmeldung aus: 09774633.3
(73) Patentinhaber: Sew-Eurodrive GmbH & Co. KG, 76646 Bruchsal (DE)
(72) Erfinder: Grimm, Andreas, 13.323-301 Salto-SP (BR)
(74) Vertreter: Tüngler, Eberhard

(56) Entgegenhaltungen:
- EP-A1- 1 502 799
- EP-A2- 1 006 295
- EP-A2- 1 281 884
- EP-A2- 1 371 879
- DE-A1- 4 425 961
- DE-C1- 19 711 423
- DE-U1- 20 022 827
- JP-A- 58 077 952

## Beschreibung

Die Erfindung betrifft ein Planetengetriebe.

Aus der DE 23 05 780 ist ein Planetenträger und ein Planetengetriebe bekannt.

Aus der EP 1 006 295 A2 ist ein einstückiger Planetenträger eines epizyklischen Getriebes bekannt.

Aus der DE 197 11 423 C1 ist ein Planetenträger für ein Planetengetriebe bekannt.

Aus der EP 1 371 879 A2 ist ein Planetengetriebe bekannt.

Aus der DE 44 25 961 A1 ist ein Planetengetriebe und dessen Verwendung bekannt.

Aus der EP 1 502 799 A1 ist ein Radnabenantrieb bekannt.

Aus der JP 58077952 A ist ein Planetenreduktionsgetriebe bekannt.

Aus der EP 1 281 884 A2 ist eine Baureihe von Wellen zur Befestigung in einer Bohrung eines Aufnahmeteils bekannt.

Aus der DE 200 22 827 U1 ist eine Spannvorrichtung bekannt.

Der Erfindung liegt daher die Aufgabe zugrunde, ein Planetengetriebe weiterzubilden.

Erfindungsgemäß wird die Aufgabe bei dem Planetengetriebe nach den in Anspruch 1 angegebenen Merkmalen gelöst.

Wichtige Merkmale der Erfindung bei dem Planetengetriebe sind, dass das Planetengetriebe eine erste und eine zweiten Stufe umfasst, wobei ein Sonnenrad der zweiten Stufe mit einem Endbereich als Mitnehmer in einen Planetenträger der ersten Stufe eingreift und das Sonnenrad eine in axialer Richtung durchgehende Verzahnung aufweist. Von Vorteil ist dabei, dass das Planetengetriebe einfach herzustellen ist.

Erfindungsgemäß weist das Sonnenrad der zweiten Stufe einen mittleren Bereich auf, wo die durchgehende Verzahnung unterbrochen ist. Von Vorteil ist dabei, dass das Sonnenrad der zweiten Stufe einfacher zu fertigen ist und weniger Material benötigt wird.

Erfindungsgemäß weist die durchgehende Verzahnung im Endbereich in einem Teilbereich einen verkürzten Kopfkreis auf, wodurch ein axialer Anschlag entsteht. Von Vorteil ist dabei, dass eine axiale Kraft vom Planetenträger auf das Sonnenrad der zweiten Stufe übertragbar ist.

Erfindungsgemäß ist der Planetenträger der ersten Stufe als Gussteil gefertigt und weist annähernd die Form eines gleichschenkelig Dreiecks auf, wobei Bolzen zur Lagerung der Planetenräder annähernd in den Ecken des Dreiecks axial abstehen und die Bolzen in unterschiedlichen axialen Abständen zum Zentrum des Planetenträgers aus dem Gussteil herstellbar sind. Von Vorteil ist dabei, dass unterschiedliche Übersetzungsverhältnis einfach realisierbar sind.

Erfindungsgemäß umfasst das Planetengetriebe ein zentrales zylindermantelförmiges Gehäuseteil, welches je ein Hohlrad für die erste und zweite Stufe aufweist und eintriebsseitig mit Bohrungen in einer Stirnwand versehen ist, an der ein eintriebseitiger Flansch anschraubbar ist und abtriebsseitig als Flansch ausgeformt ist, an welchem ein Abtriebsdeckel angeschraubt ist. Von Vorteil ist dabei, dass ein großes Drehmoment übertragbar ist.

Erfindungsgemäß ist das Sonnenrad der zweiten Stufe über eine Sonnenradlager im weiteren Planetenträger gelagert. Von Vorteil ist dabei, dass das Sonnenrad sicher gelagert ist.

Bei einer weiteren vorteilhaften Ausgestaltung ist die zweite Stufe als Abtriebstufe ausgebildet, wobei ein weiterer Planetenträger der Abtriebsstufe zweiwangig und an der Abtriebsseite als Hohlwelle oder als Vollwelle ausgebildet ist, wobei die Hohlwelle vorzugsweise von einer Schrumpfscheibe umschlossen ist. Von Vorteil ist dabei, dass das Drehmoment sicher übertragen werden kann und das Planetengetriebe einfach herstellbar ist.

Bei einer weiteren vorteilhaften Ausgestaltung weist die erste Stufe drei Planetenräder auf. Von Vorteil ist dabei, dass das Drehmoment sicher übertragbar ist.

Bei einer weiteren vorteilhaften Ausgestaltung weist die zweite Stufe vier weitere Planetenräder auf. Von Vorteil ist dabei, dass ein größeres Drehmoment übertragbar ist.

Bei einer weiteren vorteilhaften Ausgestaltung ist der weitere Planetenträger der zweiten Stufe aus einem Stück gefertigt. Von Vorteil ist dabei, dass ein größeres Drehmoment übertragbar ist.

Bei einer weiteren vorteilhaften Ausgestaltung ist abtriebsseitig eine zylindermantelförmige Abdeckung am Planetengetriebe befestigbar, welche die Hohlwelle oder Vollwelle umschließt und die zylindermantelförmige Abdeckung ist, insbesondere ausschließlich, aus Biegeteilen hergestellt, welche miteinander verschraubt sind. Von Vorteil ist dabei, dass das Planetengetriebe sicher betreibbar ist und einfach herzustellen ist.

Bei einer weiteren vorteilhaften Ausgestaltung ist an den eintriebseitigen Flansch ein Vorgetriebe, insbesondere ein Kegelradgetriebe oder ein Stirnradgetriebe, anflanschbar. Von Vorteil ist dabei, dass das Planetengetriebe variable einsetzbar ist und einen großen Übersetzungsbereich abdeckt.

Bei einer weiteren vorteilhaften Ausgestaltung ist an den Abtriebsdeckel ein annähernd L-förmiger Fuß mit einem annähernd ringförmigen Teilabschnitt anschraubbar, wobei ein viereckiger Rahmen des Fußes senkrecht zum ringförmigen Teilabschnitt angeordnet ist und über Winkel und Ausstülpungen des ringförmigen Rahmens mit dem ringförmigen Rahmen verbunden ist, wobei die Winkel in viereckige Langlöcher in seitlichen Ausstülpungen des ringförmigen Teilabschnitts eingreifen. Von Vorteil ist dabei, dass das Planetengetriebe sicher befestigbar ist.

Ein erfindungsgemäßes Gussteil für einen einstückigen Planetenträger umfasst einen scheibenförmigen, annähernd dreieckigen Grundkörper, aus welchem annähernd senkrecht bis senkrecht zum scheibenförmigen, annähernd dreieckigen Grundkörper ein Rohbolzen hervorsteht, wobei der Rohbolzen eine Form aufweist, aus welcher Bolzen für ein Planetenrad in verschiedenen Positionen auf dem scheibenförmigen Grundkörper fertigbar sind. Von Vorteil ist dabei, dass aus mit der gleichen Gussform Planetenträger für Planetengetriebe mit verschiedenen Übersetzungen herstellbar sind.

Bei einer weiteren Ausführungsform weist der Rohbolzen eine ovale oder annähernd dreieckige Grundfläche auf. Von Vorteil ist dabei, dass Bolzen für die Planetenräder in unterschiedlichen Abständen zu einer zentralen Achse des Planetenträgers fertigbar sind.

Ein erfindungsgemäßer Planetenträger ist aus einem Gussteil mit einem scheibenförmigen annähernd dreieckigen Grundkörper und dazu senkrechten Rohbolzen gefertigt, wobei der Grundkörper eine zentrale kreisförmige Öffnung mit einer Innenverzahnung aufweist, und um die kreisförmige Öffnung verdickt ausgeführt ist, und der Planetenträger weist annähernd in den Ecken des Grundkörpers drei Bolzen für Planetenträger auf, welche aus den Rohbolzen in unterschiedlichen Abständen zum Zentrum der kreisförmigen Ausnehmung herstellbar sind. Der Planetenträger weist somit eine vorteilhafte Geometrie auf, welche leichter und flexibler ist.

Bei einem Gussteil für einen einstückigen Planetenträger ist vorsehbar, dass das Gussteil einen Grundkörper umfasst, aus welchem ein Rohbolzen hervorsteht, wobei der Rohbolzen eine Form aufweist, aus welcher ein Bolzen für ein Planetenrad in verschiedenen Positionen auf dem Grundkörper fertigbar ist. Von Vorteil dabei ist, dass ein und dasselbe Gussteil aus derselben Gussform für Planetengetriebe mit unterschiedlichen Übersetzungen einsetzbar ist.

Bei einer Weiterbildung des Gussteils ist der Grundkörper scheibenförmig, und vorzugsweise annähernd dreieckig mit abgerundeten Ecken ausgeformt. Von Vorteil dabei ist, dass das Gussteil einfach herstellbar ist.

Bei einer Weiterbildung des Gussteils stehen die Rohbolzen annähernd senkrecht bis senkrecht vom Grundkörper ab. Von Vorteil dabei ist, dass die Rohbolzen einfach bearbeitbar sind.

Bei einer weiteren Weiterbildung des Gussteils weist der Rohbolzen eine ovale oder annähernd dreieckige Grundfläche an seinem Ansatz zum Grundkörper auf. Von Vorteil dabei ist, dass ein Bolzen für ein Planetenrad in unterschiedlichen Positionen am Grundkörper aus dem Rohbolzen fertigbar ist.

Bei einer weiteren Weiterbildung des Gussteils ist der scheibenförmige Grundkörper annähernd dreieckig und weist in jeder Ecke einen Rohbolzen auf. Von Vorteil dabei ist, dass drei Bolzen aus dem Gussteil fertigbar sind.

Ein Planetenträger für ein Planetengetriebe ist der Planetenträger aus einem wie vorstehend beschriebenen Gussteil fertigbar. Von Vorteil dabei ist, dass mit ein und derselben Gussform Planetenträger für Planetengetriebe mit unterschiedlichen Übersetzungen fertigbar sind.

Bei einer Weiterbildung des Planetenträgers weist der Grundkörper eine zentrale kreisförmige Öffnung mit einer Innenverzahnung auf und ist um die kreisförmige Öffnung verdickt ausgeführt, und der Planetenträger weist annähernd in den Ecken des Grundkörpers senkrecht zum Grundkörper drei Bolzen für Planetenräder auf, welche aus den Rohbolzen in unterschiedlichen Abständen zum Zentrum der kreisförmigen Ausnehmung herstellbar sind. Von Vorteil dabei ist, dass ein Drehmoment sicher in unterschiedlichen Übersetzungsverhältnissen übertragbar ist.

Bei einer weiteren Weiterbildung des Planetenträgers ist der Planetenträger einstückig ausgeführt und Bolzen für die Planetenräder stehen an einem Grundkörper ab, wobei die Bolzen in unterschiedlichen radialen Abständen zu einer Drehachse des Grundkörpers fertigbar sind, wobei bei einem minimalen Abstand des Bolzens zur Drehachse die Differenz aus einer größten radialen Ausdehnung des Grundkörpers und dem größten radialen Abstand des Bolzens zum Zentrum des Grundkörpers größer ist als der halbe Radius des Bolzens vorzugsweise als der Radius des Bolzens. Von Vorteil dabei ist, dass mit ein und derselben Gussform Planetenträger für Planetengetriebe mit unterschiedlichen Übersetzungen fertigbar sind.

Bei einem Verfahren zur Herstellung eines Planetenträgers ist vorsehbar, dass aus einem in radialer Richtung zu einer Drehachse des Planetenträgers längsgestrecktem Rohbolzen, welcher sich in axialer Richtung erstreckt, ein Bolzen für ein Planetenrad spanabtragend gefertigt wird. Von Vorteil dabei ist, dass mit ein und derselben Gussform Planetenträger für Planetengetriebe mit unterschiedlichen Übersetzungen fertigbar sind.

Bei einer Weiterbildung des Verfahrens wird der radiale Abstand des Bolzens zur Drehachse im Rahmen des längsgestrecktem Rohbolzens gewählt. Von Vorteil dabei ist, dass mit ein und derselben Gussform Planetenträger für Planetengetriebe mit unterschiedlichen Übersetzungen fertigbar sind.

Bei einer weiteren Weiterbildung des Verfahrens wird in eine Zylindermantelfläche des Planetenträgers, welche eine zur Drehachse konzentrische Öffnung, insbesondere kreisförmige Öffnung, umgibt, eine Innenverzahnung eingebracht. Von Vorteil dabei ist, dass ein Drehmoment sicher übertragbar ist.

Bei einer Hohlwelle, welche eine nicht durchgehende Ausnehmung aufweist, ist vorsehbar, dass in die Innenwand der Hohlwelle, welche die Ausnehmung begrenzt, eine Spiralförmige Nut eingebracht ist, welche vorzugsweise in einer Fase an einer abtriebsseitigen Stirnfläche der Hohlwelle ausläuft. Von Vorteil dabei ist, dass eine Entlüftung zur Einführung einer Antriebswelle schnell und einfach fertigbar ist.

Bei einer Weiterbildung der Hohlwelle ist die Hohlwelle an den Planetenträger oder einen weiteren Planetenträger als Abtriebswelle angeformt. Von Vorteil dabei ist, dass ein Drehmoment sicher vom Planetenträger auf die Abtriebswelle übertragbar ist und eine Antriebswelle einfach mit der Abtriebswelle verbindbar ist.

Bei einem weiteren Planetenträger ist vorsehbar, dass eine Abtriebswelle als sacklochartige Hohlwelle einstückig an dem weiteren Planetenträger angeformt ist, wobei in die Innenwand der Hohlwelle, welche eine Zylindermantelfläche bildet, eine Spiralförmige Nut eingebracht ist. Von Vorteil dabei ist, dass sich eine Antriebswelle einfach direkt mit dem Planetenträger oder dem weiteren Planetenträger verbinden lässt.

Bei einer weiteren Weiterbildung des weiteren Planetenträgers, umfasst die Hohlwelle von einer Abtriebsseite her Ausnehmungen, welche vorzugsweise einen kreisförmigen Umfang aufweisen, wobei die Ausnehmungen zu einer Eintriebsseite hin einen jeweils kleiner werdenden Durchmesser haben, wobei die abtriebsseitigste Ausnehmung eine in die Innenwand der Hohlwelle eingebrachte, spiralförmige Nut aufweist. Von Vorteil dabei ist, dass sich eine Abtriebswelle einfach mit dem Planetenträger oder dem weiteren Planetenträger verbinden lässt.

Bei einer weiteren Weiterbildung des weiteren Planetenträgers, läuft ein Ende der Nut in einer Fase an einer abtriebsseitigen Stirnfläche der Hohlwelle aus. Von Vorteil dabei ist, dass die Entlüftung der Sacklochartigen Hohlwelle auch mit eingesteckter Antriebswelle erhalten bleibt.

Bei einer weiteren Weiterbildung des weiteren Planetenträgers endet die eintriebsseitigste Ausnehmung sacklochartig im weiteren Planetenträger. Von Vorteil dabei ist, dass der weitere Planetenträger stabil ist.

Bei einer weiteren Weiterbildung des weiteren Planetenträgers ist jeweils zwischen den Ausnehmungen ein Freistich mit zu den Durchmessern der benachbarten Ausnehmungen größerem Durchmesser in die Hohlwelle eingebracht. Von Vorteil dabei ist, dass eine Antriebswelle wohldefiniert in der Abtriebswelle gehalten ist.

Bei einer weiteren Weiterbildung des weiteren Planetenträgers bilden die Ausnehmungen und die Freistiche zusammen eine nicht durchgehende Ausnehmung im weiteren Planetenträger. Von Vorteil dabei ist, dass der weitere Planetenträger stabiler ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme auf die Zeichnung näher erläutert. Es zeigen rein schematisch:
- Fig. 1: eine Explosionsdarstellung eines erfindungsgemäßen Planetengetriebes;
- Fig. 2: einen Schnitt durch zwei Ausführungsformen, wobei die obere Hälfte der Figur 2 das in Figur 1 gezeigte Planetengetriebe ohne Abdeckung und die untere Hälfte eine Ausführungsform mit Vollwelle zeigt;
- Fig. 3: eine Seitenansicht und eine Frontansicht einer weiteren Ausführungsform mit einer Vollwelle als Abtriebswelle und einem Stirnradgetriebe als Vorgetriebe;
- Fig. 4: eine Seitenansicht und eine Frontansicht einer weiteren Ausführungsform mit einer Hohlwelle als Abtriebswelle und einem Stirnradgetriebe als Vorgetriebe;
- Fig. 5: eine Seitenansicht und eine Frontansicht einer anderen Ausführungsformen mit einem Kegelradgetriebe als Vorgetriebe;
- Fig. 6: eine Draufsicht der in Figur 5 gezeigten Ausführungsform;
- Fig. 7: eine dreidimensionale Ansicht eines erfindungsgemäßen Planetenträgers;
- Fig. 8: eine teilweise Seitenansicht des in Figur 8 gezeigten Planetenträgers;
- Fig. 9: eine teilweise Frontansicht des in Figur 8 gezeigten Planetenträgers; und
- Fig. 10: einen Teilschnitt durch eine erfindungsgemäße Hohlwelle bzw. einen weiteren Planetenträger.

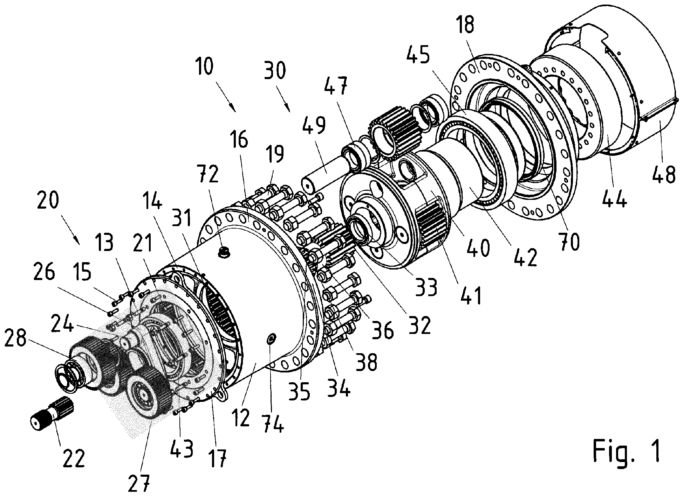

Figur 1 zeigt ein erfindungsgemäßes Planetengetriebe 10 in Explosionsdarstellung. Das Planetengetriebe 10 weist ein zentrales zylindermantelförmiges Gehäuseteil 12 auf. An einer eintriebseitigen Stirnseite des zentralen zylindermantelförmigen Gehäuseteils 12 ist mittels einer in eine Bohrung 14 in der Stirnwand befestigten Schraube 15 ein eintriebsseitiger Flansch 17 angeschraubt. Am eintriebsseitigen Flansch 17 ist eine Anbauschraube 13 angeordnet. Die Anbauschraube 13 dient zum Anbauen eines Vorgetriebes.

Abtriebsseitig ist das zentrale zylindermantelförmige Gehäuseteil 12 als Flansch 16 ausgeformt. An den Flansch 16 ist mittels einer weiteren Schraube 19 ein Abtriebsdeckel 18 angeschraubt. Das zentrale zylindermantelförmige Gehäuseteil 12 weist eine Entlüftung 72 und eine Verschlussschraube 74 auf.

Im zentrale zylindermantelförmige Gehäuseteil 12 ist eintriebsseitig eine erste Stufe 20 des Planetengetriebes 10 angeordnet. Eine Innenfläche des zentralen zylindermantelförmigen Gehäuseteils 12 ist in einem Teilbereich als Hohlrad 21 für die erste Stufe ausgebildet. Ein weiteres Sonnenrad 22 der ersten Stufe ragt aus dem zentralen zylindermantelförmigen Gehäuseteil 12 mit einem als Vielkeilverzahnung ausgeführten Endbereich heraus. Ein Verzahnungsbereich des weiteren Sonnenrades 22 kämmt mit einem Planetenrad 27. Das Planetenrad 27 ist auf Bolzen 24 eines Planetenträgers 26 der ersten Stufe 20 mittels eines Planetenradlagers 28 drehbar um eine Drehachse gelagert. Das Planetenradlager 28 ist durch entsprechende Sicherungsringe axial fixiert. Die erste Stufe 20 weist vorzugsweise drei Planetenräder auf.

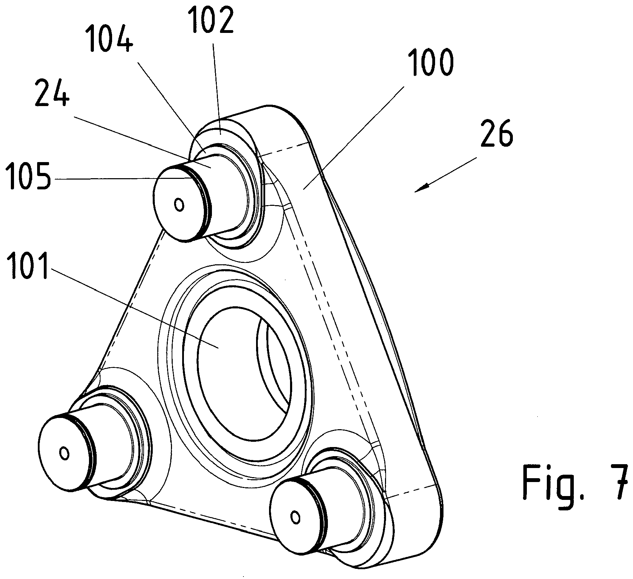

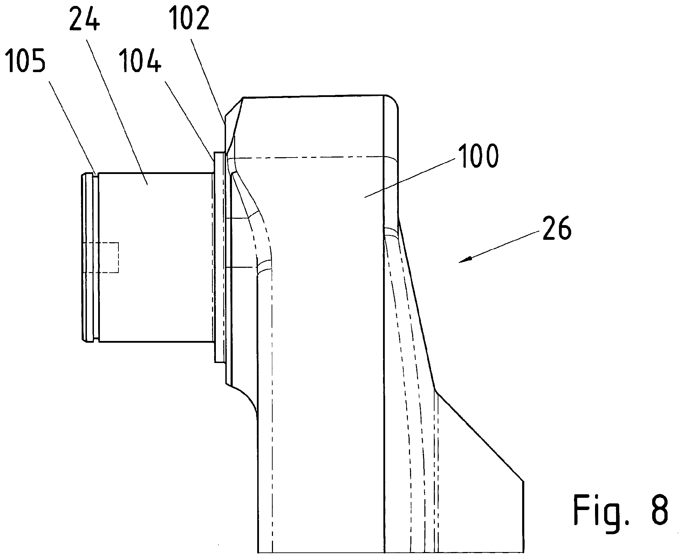

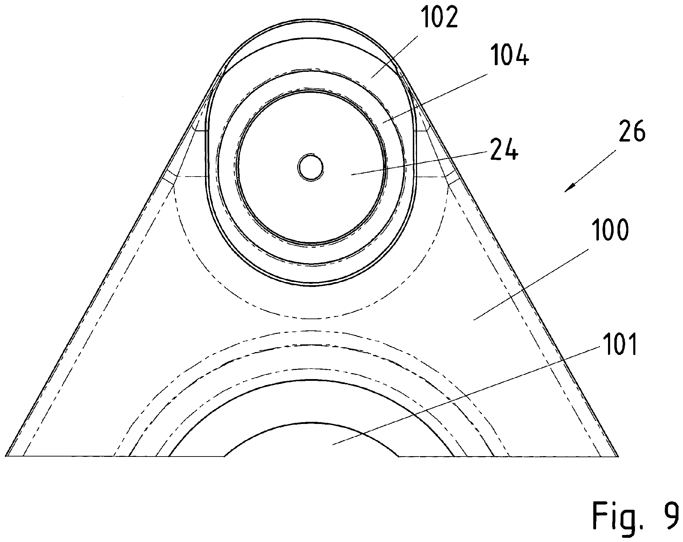

Die Figuren 7, 8 und 9 zeigen den Planetenträger 26 der ersten Stufe 20 im Detail. Der Planetenträger 26 der ersten Stufe 20 weist einen Grundkörper 100 auf, welcher vorzugsweise scheibenförmig ausgebildet ist. Mit scheibenförmig ist hier lediglich gemeint, dass der Grundkörper 100 in Bezug auf seine Ausdehnung in einer Ebene dünn ausgebildet ist, d.h. die Ausdehnung in Richtung der Drehachse ist kleiner als die Ausdehnung in einer Ebene senkrecht zur Drehachse.

Vom Grundkörper 100 stehen nach dem Giessprozess Rohbolzen in axialer Richtung hervor. Die Rohbolzen weisen eine Form auf, so dass ein Bolzen für ein Planetenrad in verschiedenen Positionen auf dem Grundkörper fertigbar ist.

Vorzugsweise zeigen die Rohbolzen aus axialer Blickrichtung eine in radialer Richtung ovalförmig verlängerte Grundfläche 102 am Ansatz zum Grundkörper. Die Form des Rohbolzens ist bis auf die nötige Formschräge, bedingt durch den Giessprozess, als Zylinder mit der Grundfläche 102 als Basis gebildet. Die Stirnfläche des freistehenden Endes des Rohbolzens ist ebenso bedingt durch den Giessprozess konvex gekrümmt.

Aus den Rohbolzen lassen sich die Bolzen 24 in verschiedenen radialen Abständen zu einer zentralen Achse des Planetengetriebes 10 ausbilden. Vorzugsweise wird der Bolzen 24 aus dem Rohbolzen durch ein spanabtragendes Verfahren, wie zum Beispiel Drehen oder Fräsen herausgebildet.

Vorzugsweise ist der Bolzen 24 aus dem Rohbolzen in zwei Arbeitsschritten mit kleiner werdendem Durchmesser spannend gefertigt. Dadurch entsteht abgesetzt von der Grundfläche 102 eine Anschlagfläche 104. Am freistehenden Endbereich des Bolzens ist eine Sicherungsnut 105 eingebracht. Zwischen einem Sicherungsring, welcher in der Sicherungsnut 105 eingebracht ist und der Anschlagsfläche 104 ist ein Innenring des Planetenradlagers 28 für das Planetenrad 27 wohldefiniert montierbar.

Der Rohbolzen kann aber auch zum Beispiel eine dreieckige Grundfläche aufweisen. So lassen sich die Bolzen auch in Umfangsrichtung in verschiedenen Positionen fertigen.

Der Grundkörper 100 ist vorzugsweise als ein annähernd gleichschenkliges Dreieck mit einer zentralen kreisförmigen Ausnehmung 101 ausgeführt.

Vorzugsweise ist in jeder Ecke des als gleichschenkliges Dreieck ausgeführten scheibenförmigen Grundkörpers 100 ein Rohbolzen angeformt. Durch die spezielle Ausbildung der Rohbolzen am Gussteil kann aus dem gleichen Gussteil ein Planetenträger 26 für verschiedene Übersetzungen der erste Stufe 20 gefertigt werden, da bei gleichem weiteren Sonnenrad 22 Planetenräder 27 mit unterschiedlichen Durchmessern montierbar sind.

Die Variabilität der Position des Bolzen 24 auf dem Grundkörper 100 ist so groß, dass bei einem minimalen radialen Abstand des Bolzen 24 zur zentralen Drehachse des Planetenträgers 26 der Grundkörper soweit über den Bolzen in radialer Richtung hinausragt, dass ein minimaler Abstand zwischen dem maximalen Abstand der Umfangsfläche des Grundkörpers und der Umfangsfläche des Bolzens 24 grösser ist als der Durchmesser des Bolzens 24 oder zumindest der Radius Bolzen 24.

Das bei minimalem radialem Abstand des Bolzens 24 überschüssige Material des Grundkörpers 100 führt zu einem ruhigeren Lauf des Planetenträgers 26.

Bei einer alternativen Ausführungsform des Planetenträgers 26 ist direkt an den Planetenträger 26 eine Abtriebswelle angegossen. Die Abtriebswelle ist vorzugsweise als Hohlwelle ausgeführt. Die Hohlwelle weist eine spiralförmig umlaufende Nut in einer innen liegenden Zylindermantelfläche auf, wie bei der gezeigten Ausführungsform des weiteren Planetenträgers 40.

Bei einem Verfahren zu Herstellung des Planetenträgers 26 wird zuerst der Grundkörper mit den Rohbolzen gegossen. Dann wird der radiale Abstand des Bolzens 24 zur zentralen Drehachse des Planetenträgers 26 festgelegt und der Bolzen 24 entsprechend aus dem Rohbolzen herausgearbeitet. Dabei wird zuerst mit einem größeren Durchmesser als dem Durchmesser des Bolzens bis auf eine Grundfläche 102 am Ansatz des Bolzens 26 zum Grundkörper Material des Rohbolzens abgetragen.

Anschließend wird der Bolzen mit dem endgültigen Durchmesser gefertigt. Dabei entsteht abgestuft zur Grundfläche 102 die Anschlagsfläche 104. Das freistehende Ende des Rohbolzens wird plan abgestochen und vorzugsweise wird eine zentrale Bohrung als Sackloch oder Durchgangsbohrung in den Bolzen 26 eingebracht.

Weiter wird in eine Zylindermantelfläche des Planetenträgers 26, welche vom Grundkörper 100 umfasst wird, und eine zur Drehachse des Planetenträgers 26 konzentrische Öffnung umgibt, eine Innenverzahnung eingebracht insbesondere eingefräst. Die Öffnung ist vorzugsweise kreisförmig. Alternative Ausführungsformen weisen eine ovale oder andersförmige Öffnung auf, welche eine formschlüssige, drehfeste Verbindung mit Teilen, welche mit dem Planetenträger verbunden werden sollen, wie zum Beispiel ein Sonnenrad 32 der zweiten Stufe, ermöglichen.

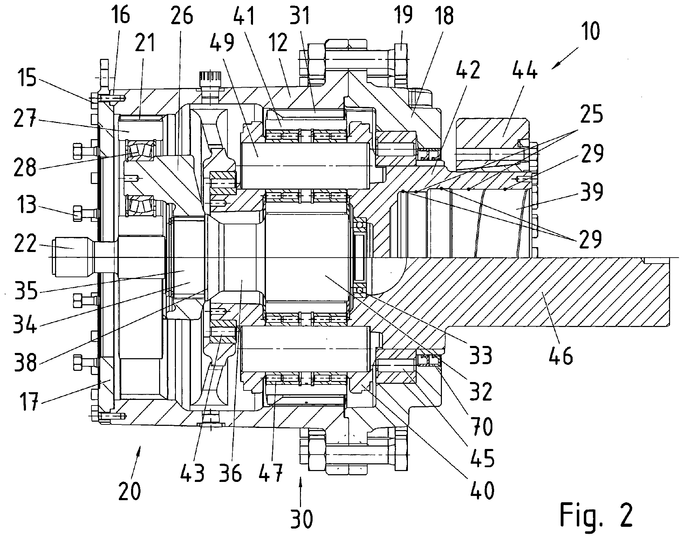

Wie in den Figuren 1 und 2 gezeigt ist abtriebsseitig im zentralen zylindermantelförmigen Gehäuseteil 12 eine zweite Stufe 30 angeordnet. In der Innenfläche des zentralen zylindermantelförmigen Gehäuseteils 12 ist ein Hohlrad 31 für die zweite Stufe 30 ausgebildet. Ein Sonnenrad 32 der zweiten Stufe 30 weist eine durchgehend gefertigte Verzahnung auf, d.h. die Zähne der verschiedenen Verzahnungsbereiche liegen in einer Flucht. Die durchgehende Verzahnung des Sonnenrads 32 der zweiten Stufe 30 ist in einem mittleren Bereich 36 des Sonnenrads 32 der zweiten Stufe 30 durch eine Art Freistich unterbrochen.

Ein eintriebsseitiger Endbereich 34 des Sonnenrads 32 der zweiten Stufe 30 weist in einem Teilbereich 35 eine verkürzten Verzahnung und somit einen verkleinerten Kopfkreisdurchmesser auf. Mit diesem Teilbereich 35 greift das Sonnenrad 32 der zweiten Stufe 30 in den Planetenträger 26 der ersten Stufe ein. Der Planetenträger 26 der ersten Stufe 20 weist dafür eine korrespondierende Verzahnung in seiner zentralen kreisförmigen Ausnehmung auf. Somit sind die der Planetenträger 26 und das Sonnenrad 32 formschlüssig verbunden. Die Zentrierung erfolgt über die Zahnflanken. Die Passung zwischen den Verzahnungen sind als Spielpassung, Übergangspassung oder Presspassung ausführbar. Für besonders spielarme Ausführung ist auch eine abspannende Verbindung möglich.

Durch den verkürzten Kopfkreis im Teilbereich 35 entsteht ein axialer Anschlag 38 an dem der Planetenträger 26 mit einer abtriebsseitigen Stirnfläche ansteht.

Das Sonnenrad 32 der zweiten Stufe 30 ist mit einem abtriebsseitigen Endabschnitt durch ein Sonnenradlager 33, welches vorzugsweise als Rillenkugellager ausgeführt ist, in einem weiteren Planetenträger 40 der zweiten Stufe 30 gelagert.

Der weitere Planetenträger 40 ist entweder wie in Figur 1 gezeigt als zweiwangiger Planetenträger ausgeführt oder in einer weiteren nicht gezeigten Ausführungsform entsprechend dem Planetenträger 26 der ersten Stufe 20 als einwangiger Planetenträger mit variablen Bolzen gefertigt.

Im weiteren Planetenträger 40 ist ein weiteres Planetenrad 41 mittels eines Bolzenlagers 47 auf einem weiteren Bolzen 49 gelagert. Der weitere Bolzen 49 ist in Ausnehmungen in Wangen des weiteren Planetenträgers 40 gehalten. Vorzugsweise sind als Bolzenlager 47 zwischen dem weiteren Bolzen 49 und dem weiteren Planetenrad 41 zwei Doppelzylinderrollenlager vorgesehen.

Eintriebsseitig ist der weitere Planetenträger 40 von einem Planetenträgerlager 43 in einer Zwischenwand des zentralen zylindermantelförmigen Gehäuseteils 12 gelagert.

Abtriebsseitig ist der weitere Planetenträger 40 entweder als Hohlwelle 42 oder als Vollwelle 46 ausgeformt. Die Hohlwelle 42 oder die Vollwelle 46 bilden eine einstückig mit dem weiteren Planetenträger 40 ausgebildete Abtriebswelle des Planetengetriebes 10.

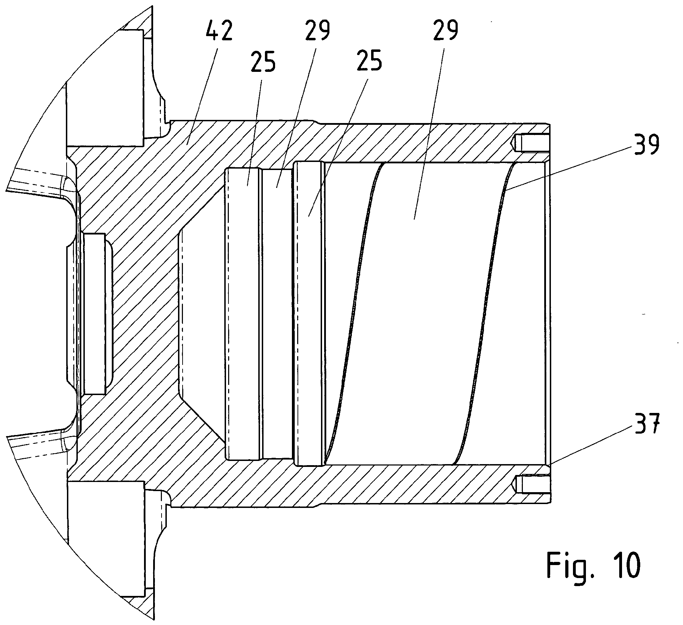

Figur 10 zeigt einen Teilschnitt durch den weiteren Planetenträger 40 mit der Abtriebswelle als Hohlwelle 42. Die Innenwand der Hohlwelle 42 bildet eine Zylindermantelfläche. In die Innenwand ist eine spiralförmige Nut 39 eingebracht.

Die Hohlwelle ist von der Abtriebsseite her durch Ausnehmungen 29 gebildet, welche vorzugsweis einen kreisförmigen Umfang aufweisen. Die Durchmesser der Ausnehmungen 29 werden von der Abtriebsseite zur Eintriebsseite des weiteren Planetenträgers 40 hin kleiner.

Zwischen je zwei Ausnehmungen 29 sind zylindermantelartige Freistiche 25 mit größerem Durchmesser als die benachbarten Ausnehmungen 29 angeordnet. Die Ausnehmungen 29 und die Freistiche 25 bilden ein Sackloch im weiteren Planetenträger 40 beziehungsweise dessen Abtriebswelle.

Die Spiralförmige Nut 39 ist nur in der abtriebsseitigsten Ausnehmung 29 eingebracht und läuft abtriebsseitig in einer Fase 37 an der Stirnfläche der Hohlwelle 42 aus. Die Fase 37 ist an der innenliegenden Kante der Stirnfläche angebracht.

Eine Antriebswelle lässt sich in die Hohlwelle einschieben. Durch die spiralförmig umlaufende Nut 39 wird der von der Antriebswelle in der Hohlwelle eingeschlossen Raum entlüftet. Die spiralförmige Nut lässt sich besonders einfach und kostengünstig in die Innenfläche der Hohlwelle durch einfaches Abziehen eines Werkezuges während einer Drehbewegung der Hohlwelle einbringen.

Die erfinderische Ausführungsart der Hohlwelle 42 mit einer spiralförmigen Nut lässt sich in jeder beliebigen Hohlwelle, welche eine Sacklochartige Aufnahme für eine Antriebswelle aufweist, ausführen.

Die weiter innenliegenden Ausnehmungen 29 dienen zur Aufnehme eines Biegemomentes der Antriebswelle. Die abtriebsseitigste Ausnehmung 29 dient zur Drehmomentübertragung in Verbindung mit der die Hohlwelle 42 im Bereich der abtriebsseitigsten Ausnehmung 29 umgebenden Schrumpfscheibe 44.

Durch das Auslaufen der spiralförmig umlaufenden Nut 39 in der Fase 37 ist auch während des Betriebes des Planetengetriebes 10 eine Entlüftung gesichert. Somit führt eine Erwärmung des weiteren Planetenträgers 40 nicht zu einem herausdrücken der Antriebswelle aus der Hohlwelle 42.

Wie in den Figuren 1 und 2 gezeigt schaut die Vollwelle 46 oder Hohlwelle 42 mit einem weiteren Endabschnitt aus dem Abtriebsdeckel 18 hervor und ist über ein Abtriebslager 45 im Abtriebsdeckel 18 gelagert. Zwischen Vollwelle 46 oder Hohlwelle 42 und dem Abtriebsdeckel 18 ist zur Abdichtung ein Wellendichtring 70 angeordnet, vorzugsweise als doppelter Wellendichtring. Zur Befestigung einer anzutreibenden Vorrichtung umgibt eine Schrumpfscheibe 44 zumindest teilweise den weiteren Endabschnitt der Hohlwelle 42.

Zur Vermeidung von Verletzung ist eine zylindermantelförmige Abdeckung 48 am Abtriebsdeckel 18 drehfest befestigbar. Die zylindermantelförmige Abdeckung 48 ist vorzugsweise, insbesondere ausschließlich, aus Biegeteilen hergestellt, welche miteinander verschraubt sind.

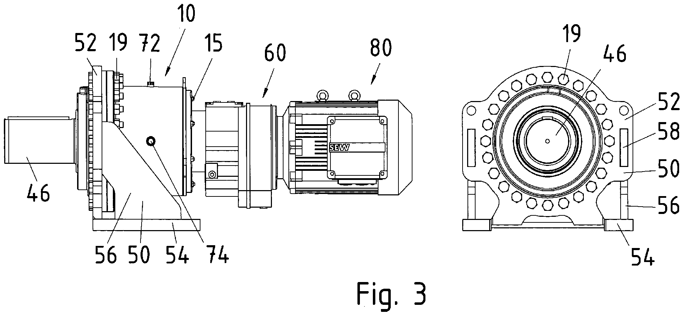

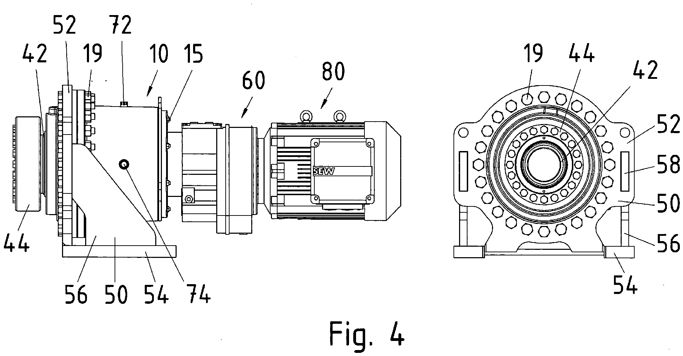

Figur 3 und Figur 4 zeigen je eine erfindungsgemäße Ausführungsform, wobei an den Abtriebsdeckel 18 ein L-förmiger Fuß 50 angeschraubt ist. Der L-förmige Fuß weist einen annähernd ringförmiger Teilabschnitt 52 und einen viereckigen Rahmen 54 als Standfläche bzw. Befestigungsfläche auf. Der ringförmige Teilabschnitt 52 umfasst Ausstülpungen an denen der viereckige Rahmen 54 befestigt ist. Zusätzlich sind der annähernd ringförmiger Teilabschnitt 52 und der viereckiger Rahmen 54 über einen Winkel 56 miteinander verbunden. Ein Endbereich des Winkels 56 ragt durch ein viereckiges Langloch 58 einer Ausstülpung am annähernd ringförmigen Teilabschnitt 52 hindurch. Beide Teile sind vorzugsweise miteinander verschweißt. Dies erleichtert die Montage des L-förmigen Fußes 50.

Zusätzlich zeigen Figur 3 und Figur 4 ein an der Eintriebsseite des Planetengetriebes 10 angeschlossenes Stirnradgetriebe 60, welches wiederum an einen Motor 80 angeschlossen ist.

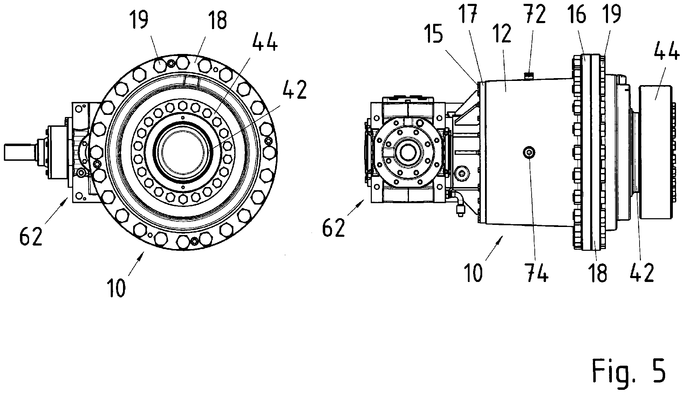

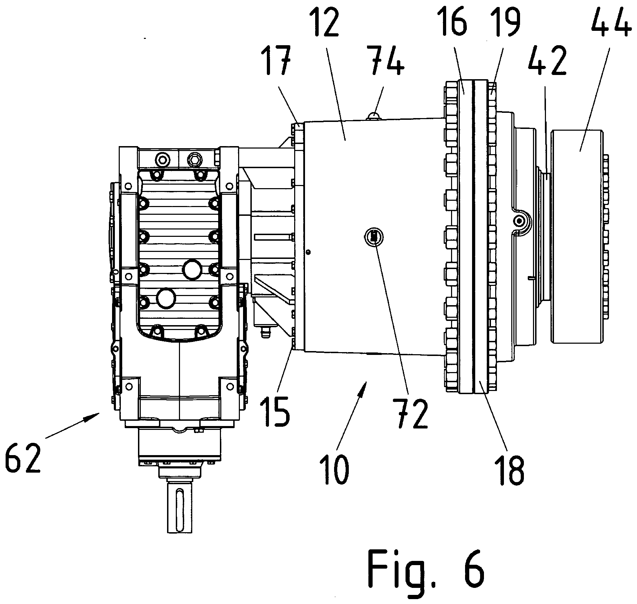

Figur 5 und Figur 6 zeigen eine Ausführungsform mit einem Kegelradgetriebe 70 als Vorgetriebe

### Bezugszeichenliste

- 10: Planetengetriebe
- 12: zentrales zylindermantelförmiges Gehäuseteil
- 13: Anbauschraube
- 14: Bohrung in Stirnwand
- 15: Schraube
- 16: Flansch
- 17: eintriebsseitiger Flansch
- 18: Abtriebsdeckel
- 19: weitere Schraube
- 20: erste Stufe
- 21: Hohlrad für die erste Stufe
- 22: weiteres Sonnenrad
- 24: Bolzen
- 25: Freistich
- 26: Planetenträger
- 27: Planetenrad
- 28: Planetenradlager
- 29: kreisförmige Ausnehmung
- 30: zweite Stufe
- 31: Hohlrad für die zweite Stufe
- 32: Sonnenrad der zweiten Stufe
- 33: Sonnenradlager
- 34: Endbereich
- 35: Teilbereich
- 36: mittlerer Bereich
- 37: Fase
- 38: axialer Anschlag
- 39: spiralförmige Nut
- 40: weiterer Planetenträger
- 41: weiteres Planetenrad
- 42: Hohlwelle
- 43: Planetenträgerlager
- 44: Schrumpfscheibe
- 45: Abtriebslager
- 46: Vollwelle
- 47: Bolzenlager
- 48: zylindermantelförmige Abdeckung
- 49: weiterer Bolzen
- 50: L-förmiger Fuß
- 52: annähernd ringförmiger Teilabschnitt
- 54: viereckiger Rahmen
- 56: Winkel
- 58: viereckiges Langloch
- 60: Stirnradgetriebe
- 70: Wellendichtring
- 72: Entlüftung
- 74: Verschlussschraube
- 80: Motor
- 100: scheibenförmiger Grundkörper
- 101: zentrale kreisförmige Ausnehmung
- 102: Grundfläche
- 104: Anschlagsfläche
- 105: Sicherungsnut

## Patentansprüche

1. Planetengetriebe (10) mit einer ersten und einer zweiten Stufe,
wobei ein Sonnenrad (32) der zweiten Stufe mit einem Endbereich (34) als Mitnehmer in einen Planetenträger (26) der ersten Stufe eingreift,
**dadurch gekennzeichnet, dass**
das Sonnenrad (32) eine in axialer Richtung durchgehend gefertigte Verzahnung aufweist,
wobei das Sonnenrad (32) einen mittleren Bereich (36) aufweist, wo die durchgehende Verzahnung unterbrochen ist,
wobei die durchgehende Verzahnung im Endbereich (34) in einem Teilbereich (35) verkürzte Zähne und somit einen verkleinerten Kopfkreisdurchmesser aufweist,
wodurch ein axialer Anschlag (38) entsteht,
wobei der Planetenträger (26) der ersten Stufe als Gussteil gefertigt ist und annähernd die Form eines gleichschenkeligen Dreiecks aufweist, wobei Bolzen zur Lagerung der Planetenräder annähernd in den Ecken des Dreiecks axial abstehen,
wobei das Sonnenrad (32) der zweiten Stufe über ein Sonnenradlager (33) in einem weiteren Planetenträger (40) gelagert ist,
wobei das Planetengetriebe (10) ein zentrales zylindermantelförmiges Gehäuseteil (12) umfasst, welches je ein Hohlrad (21, 31) für die erste und zweite Stufe aufweist und eintriebsseitig mit Bohrungen in einer Stirnwand versehen ist, an der ein eintriebseitiger Flansch (17) anschraubbar ist und abtriebsseitig als Flansch (16) ausgeformt ist, an welchem ein Abtriebsdeckel (18) angeschraubt ist.

2. Planetengetriebe (10) nach einem der Ansprüche 1,
**dadurch gekennzeichnet, dass**
die zweite Stufe als Abtriebstufe ausgebildet ist, wobei ein weiterer Planetenträger (40) der Abtriebsstufe an der Abtriebsseite als Hohlwelle (42), welche vorzugsweise eine Schrumpfscheibe (44) umschließt, oder als Vollwelle (46) ausgebildet ist.

3. Planetengetriebe (10) nach einem der Ansprüche 2,
**dadurch gekennzeichnet, dass**
die erste Stufe drei Planetenräder aufweist.

4. Planetengetriebe (10) nach einem der Ansprüche 3,
**dadurch gekennzeichnet, dass**
die zweite Stufe vier weitere Planetenräder aufweist.

5. Planetengetriebe (10) nach einem der vorhergehenden Ansprüche,
wobei der Planetenträger (26) aus einem Gussteil gefertigt ist,
wobei das Gussteil für einen einstückigen Planetenträger (26) vorgesehen ist, wobei das Gussteil einen Grundkörper (100) umfasst, aus welchem Rohbolzen hervorstehen,
wobei die Rohbolzen jeweils eine Form aufweisen, aus welcher jeweils ein Bolzen für ein Planetenrad (27) in verschiedenen Positionen, also in verschiedenen Radialabständen zu einer Drehachse des Planetenträgers (26), auf dem Grundkörper (100) fertigbar ist,
wobei der Grundkörper (100) scheibenförmig ausgeformt ist
wobei die Rohbolzen annähernd senkrecht oder senkrecht vom Grundkörper (100) abstehen
und wobei die Rohbolzen und die Bolzen parallel zur Drehachse des Planetenträgers (26) ausgerichtet sind
und die Rohbolzen jeweils aus axialer Blickrichtung eine in radialer Richtung ovalförmig verlängerte Grundfläche (102) am Ansatz zum Grundkörper (100) zeigen
wobei das Gussteil für einen einstückigen Planetenträger (26) vorgesehen ist,
wobei das Gussteil einen Grundkörper (100) umfasst, aus welchem Rohbolzen hervorstehen,
wobei die Rohbolzen jeweils eine Form aufweisen, aus welcher jeweils ein Bolzen für ein Planetenrad (27) in verschiedenen Positionen, also in verschiedenen Radialabständen zu einer Drehachse des Planetenträgers (26), auf dem Grundkörper (100) fertigbar ist,
wobei der Grundkörper (100) scheibenförmig ausgeformt ist
wobei die Rohbolzen annähernd senkrecht oder senkrecht vom Grundkörper (100) abstehen
und wobei die Rohbolzen und die Bolzen parallel zur Drehachse des Planetenträgers (26) ausgerichtet sind
und der Rohbolzen eine ovale oder annähernd dreieckige Grundfläche (102) an seinem Ansatz zum Grundkörper (100) aufweist, wobei die Ausdehnung der Grundfläche (102) in radialer Richtung länger ist als in Umfangsrichtung.

6. Planetengetriebe (10) nach Anspruch 5,
**dadurch gekennzeichnet, dass**
der Grundkörper (100) eine zentrale kreisförmige Öffnung mit einer Innenverzahnung aufweist und um die kreisförmige Öffnung verdickt ausgeführt ist,
und der Planetenträger (26) annähernd in den Ecken des Grundkörpers (100) senkrecht zum Grundkörper (100) drei Bolzen für Planetenräder aufweist, welche aus den Rohbolzen in unterschiedlichen Abständen zum Zentrum der kreisförmigen Ausnehmung (101) herstellbar sind.

7. Planetengetriebe (10) nach einem der vorhergehenden Ansprüche,
wobei eine Abtriebswelle als sacklochartige Hohlwelle (42) einstückig an dem weiteren Planetenträger (40) angeformt ist,
**dadurch gekennzeichnet, dass**
in die Innenwand der Hohlwelle (42), welche eine Zylindermantelfläche bildet, eine Spiralförmige Nut (39) eingebracht ist,
wobei die Hohlwelle (42) eine nicht durchgehende Ausnehmung (101) aufweist,
wobei in die Innenwand der Hohlwelle (42), welche die Ausnehmung (101) begrenzt eine Spiralförmige Nut (39) eingebracht ist, welche vorzugsweise in einer Fase (37) an einer abtriebsseitigen Stirnfläche der Hohlwelle (42) ausläuft,
und wobei die Hohlwelle (42) an einen einwangigen oder weiteren Planetenträger (40) als Abtriebswelle angeformt ist,
wobei ein Ende der Nut (39) in einer Fase (37) ausläuft, welche an der umlaufenden Innenkante einer abtriebsseitigen Stirnfläche der Hohlwelle (42) ausgeführt ist.

8. Planetengetriebe (10) nach Anspruch 7,
wobei die Hohlwelle (42) von einer Abtriebsseite her Ausnehmungen, welche vorzugsweise einen kreisförmigen Umfang aufweisen, umfasst, wobei die Ausnehmungen zu einer Eintriebsseite hin einen jeweils kleiner werdenden Durchmesser aufweisen,
**dadurch gekennzeichnet, dass**
die abtriebsseitigste Ausnehmung eine in die Innenwand der Hohlwelle (42) eingebrachte, spiralförmige Nut (39) aufweist.

9. Planetengetriebe (10) nach Anspruch 7 oder 8,
**dadurch gekennzeichnet, dass**
die eintriebsseitigste Ausnehmung (101) sacklochartig im weiteren Planetenträger (40) endet.

10. Planetengetriebe (10) nach Anspruch 7, 8 oder 9,
**dadurch gekennzeichnet, dass**
jeweils zwischen den Ausnehmungen ein Freistich mit zu den Durchmessern der benachbarten Ausnehmungen größerem Durchmesser in die Hohlwelle (42) eingebracht sind.

11. Planetengetriebe (10) nach Anspruch 7, 8, 9 oder 10,
**dadurch gekennzeichnet, dass**
die Ausnehmungen und die Freistiche zusammen eine nicht durchgehende Ausnehmung (101) im weiteren Planetenträger (40) bilden.

## Claims

1. Planetary gear (10) having a first and a second stage, wherein a sun wheel (32) of the second stage engages with an end region (34) as driver in a planet carrier (26) of the first stage,
**characterised in that**
the sun wheel (32) has a continuously produced toothing in the axial direction,
wherein the sun wheel (32) has a central region (36), where the continuous toothing is interrupted,
wherein the continuous toothing has in the end region (34) in a partial region (35) shortened teeth and thus a reduced tip diameter,
whereby an axial stop (38) results,
wherein the planet carrier (26) of the first stage is produced as a cast part and has approximately the shape of an isosceles triangle, wherein bolts for mounting the planet wheels protrude axially approximately in the corners of the triangle,
wherein the sun wheel (32) of the second stage is mounted via a sun wheel bearing (33) in a further planet carrier (40),
wherein the planetary gear (10) comprises a central cylinder-lateral-surface-shaped housing part (12) which each has a crown wheel (21, 31) for the first and second stage and is provided on the input side with bores in an end wall, on which an input-side flange (17) can be screwed and on the output side is formed as a flange (16), on which an output cover (18) is screwed.

2. Planetary gear (10) according to one of claims 1,
**characterised in that**
the second stage is formed as an output stage, wherein a further planet carrier (40) of the output stage on the output side is formed as a hollow shaft (42) which preferably surrounds a shrunk-on disc (44), or is formed as a solid shaft (46) .

3. Planetary gear (10) according to one of claims 2,
**characterised in that**
the first stage has three planet wheels.

4. Planetary gear (10) according to one of claims 3,
**characterised in that**
the second stage has four further planet wheels.

5. Planetary gear (10) according to one of the preceding claims,
wherein the planet carrier (26) is produced from a cast part,
wherein the cast part is provided for a one-piece planet carrier (26), wherein the cast part comprises a base body (100), from which unfinished bolts protrude,
wherein the unfinished bolts each have a form from which each bolt is producible for a planet wheel (27) in different positions, that is to say at different radial distances from an axis of rotation of the planet carrier (26), on the base body (100),
wherein the base body (100) is of disc-shaped form
wherein the unfinished bolts protrude approximately perpendicularly or perpendicularly from the base body (100)
and wherein the unfinished bolts and the bolts are oriented parallel to the axis of rotation of the planet carrier (26)
and the unfinished bolts each have, viewed from the axial direction, a base surface (102), extended in an oval shape in the radial direction, at the attachment to the base body (100)
wherein the cast part is provided for a one-piece planet carrier (26),
wherein the cast part comprises a base body (100), from which unfinished bolts protrude,
wherein the unfinished bolts each have a form from which each bolt is producible for a planet wheel (27) in different positions, that is to say at different radial distances from an axis of rotation of the planet carrier (26), on the base body (100),
wherein the base body (100) is of disc-shaped form
wherein the unfinished bolts protrude approximately perpendicularly or perpendicularly from the base body (100)
and wherein the unfinished bolts and the bolts are oriented parallel to the axis of rotation of the planet carrier (26) and the unfinished bolt has an oval or approximately triangular base surface (102) at its attachment to the base body (100), wherein the extent of the base surface (102) in the radial direction is longer than in the circumferential direction.

6. Planetary gear (10) according to claim 5,
**characterised in that**
the base body (100) has a central circular opening with an inner toothing and is of thickened design around the circular opening,
and the planet carrier (26) has, approximately in the corners of the base body (100) perpendicularly to the base body (100) three bolts for planet wheels which are producible from the unfinished bolts at different distances from the centre of the circular cutout (101).

7. Planetary gear (10) according to one of the preceding claims,
wherein an output shaft is integrally formed as a blind-hole-like hollow shaft (42) on the further planet carrier (40),
**characterised in that**
in the inner wall of the hollow shaft (42), which constitutes a cylinder lateral surface, a spiral-shaped groove (39) is made,
wherein the hollow shaft (42) has a cutout (101) not passing all the way through,
wherein in the inner wall of the hollow shaft (42) which bounds the cutout (101) a spiral-shaped groove (39) is made, which preferably runs out in a chamfer (37) on an output-side end surface of the hollow shaft (42),
and wherein the hollow shaft (42) is integrally formed on a single-cheek or further planet carrier (40) as an output shaft,
wherein one end of the groove (39) runs out in a chamfer (37) which is made at the encircling inner edge of an output-side end surface of the hollow shaft (42).

8. Planetary gear (10) according to claim 7,
wherein the hollow shaft (42) comprises, from an output side, cutouts which preferably have a circular circumference, wherein the cutouts have, towards an input side, a respectively decreasing diameter,
**characterised in that**
the cutout furthest on the output side has a spiral-shaped groove (39) made in the inner wall of the hollow shaft (42).

9. Planetary gear (10) according to claim 7 or 8,
**characterised in that**
the cutout (101) furthest on the input side (101) ends blind-hole-like in the further planet carrier (40).

10. Planetary gear (10) according to claim 7, 8 or 9,
**characterised in that**
between each of the cutouts an undercut with a larger diameter than the diameters of the adjacent cutouts is made in the hollow shaft (42).

11. Planetary gear (10) according to claim 7, 8, 9 or 10,
**characterised in that**
the cutouts and the undercuts together form a cutout (101) not passing all the way through in the further planet carrier (40) .

## Revendications

1. Engrenage planétaire (10) comportant un premier et un deuxième étage,
dans lequel une roue solaire (32) du deuxième étage est en prise avec une région terminale (34) formant moyen d'entraînement dans un porte-satellites (26) du premier étage,
**caractérisé en ce que**
la roue solaire (32) présente une denture réalisée de façon continue dans la direction axiale,
la roue solaire (32) présentant une zone médiane (36) où la denture continue est interrompue,
la denture continue présentant des dents plus courtes et donc un diamètre de cercle de tête plus petit dans une partie (35) de la région terminale (34), formant ainsi une butée axiale (38),
le porte-satellites (26) du premier étage étant réalisé sous la forme d'une pièce moulée et présentant à peu près la forme d'un triangle équilatéral, des tourillons destinés au montage des satellites faisant saillie axialement à peu près dans les coins du triangle,
la roue solaire (32) du deuxième étage étant montée dans un autre porte-satellites (40) par l'intermédiaire d'un palier de roue solaire (33),
l'engrenage planétaire (10) comprenant une partie boîtier (12) centrale en forme d'enveloppe cylindrique, laquelle présente une couronne dentée (21, 31) respectivement pour le premier et le deuxième étage, est pourvue côté entrée de trous dans une paroi frontale, sur laquelle une bride côté entrée (17) peut être vissée, et est formée côté sortie comme une bride (16) sur laquelle est vissé un couvercle de sortie (18).

2. Engrenage planétaire (10) selon la revendication 1,
**caractérisé en ce que**
le deuxième étage est réalisé sous la forme d'un étage de sortie, un autre porte-satellites (40) de l'étage de sortie étant réalisé du côté sortie sous la forme d'un arbre creux (42), lequel entoure de préférence une frette de serrage (44), ou sous la forme d'un arbre plein (46).

3. Engrenage planétaire (10) selon la revendication 2,
**caractérisé en ce que**
le premier étage présente trois satellites.

4. Engrenage planétaire (10) selon la revendication 3,
**caractérisé en ce que**
le deuxième étage présente quatre autres satellites.

5. Engrenage planétaire (10) selon l'une des revendications précédentes,
dans lequel le porte-satellites (26) est réalisé à partir d'une pièce moulée,
dans lequel la pièce moulée est prévue pour un porte-satellites (26) monobloc, la pièce moulée comprenant un corps de base (100) duquel des tourillons bruts font saillie,
les tourillons bruts possédant chacun une forme à partir de laquelle un tourillon respectif pour un satellite (27) peut être réalisé dans différentes positions, c'est-à-dire à différentes distances radiales d'un axe de rotation du porte-satellites (26), sur le corps de base (100),
le corps de base (100) étant réalisé en forme de disque,
les tourillons bruts faisant saillie à peu près perpendiculairement ou perpendiculairement du corps de base (100)
et les tourillons bruts et les tourillons étant orientés parallèlement à l'axe de rotation du porte-satellites (26)
et les tourillons bruts présentant respectivement, vus dans la direction axiale, une surface de base (102) se prolongeant en ovale dans la direction radiale au niveau de l'attache au corps de base (100),
la pièce moulée étant prévue pour un porte-satellites (26) monobloc,
la pièce moulée comprenant un corps de base (100) duquel des tourillons bruts font saillie,
les tourillons bruts possédant chacun une forme à partir de laquelle un tourillon respectif pour un satellite (27) peut être réalisé dans différentes positions, c'est-à-dire à différentes distances radiales d'un axe de rotation du porte-satellites (26), sur le corps de base (100),
le corps de base (100) étant réalisé en forme de disque,
les tourillons bruts faisant saillie à peu près perpendiculairement ou perpendiculairement du corps de base (100)
et les tourillons bruts et les tourillons étant orientés parallèlement à l'axe de rotation du porte-satellites (26)
et le tourillon brut présentant une surface de base (102) ovale ou à peu près triangulaire au niveau de son attache au corps de base (100), l'extension de la surface de base (102) étant plus grande dans la direction radiale que dans la direction circonférentielle,

6. Engrenage planétaire (10) selon la revendication 5,
**caractérisé en ce que**
le corps de base (100) présente un orifice circulaire central muni d'une denture intérieure et est réalisé plus épais autour de l'orifice circulaire,
et le porte-satellites (26) présente à peu près dans les coins du corps de base (100), perpendiculairement au corps de base (100), trois tourillons pour des satellites, lesquels peuvent être fabriqués à partir des tourillons bruts à différentes distances du centre de l'évidement circulaire (101).

7. Engrenage planétaire (10) selon l'une des revendications précédentes,
dans lequel un arbre de sortie est réalisé d'une seule pièce sous la forme d'un arbre creux (42) en forme de trou borgne sur l'autre porte-satellites (40),
**caractérisé en ce**
**qu'**une rainure en forme de spirale (39) qui forme une surface d'enveloppe cylindrique est pratiquée dans la paroi intérieure de l'arbre creux (42),
l'arbre creux (42) présentant un évidement non débouchant (101),
une rainure en forme de spirale (39) étant pratiquée dans la paroi intérieure de l'arbre creux (42) qui limite l'évidement (101), laquelle se termine de préférence par un chanfrein (37) sur une face frontale côté sortie de l'arbre creux (42),
et l'arbre creux (42) étant formé en tant qu'arbre de sortie sur un porte-satellites (40) à une joue ou un autre porte-satellites (40),
une extrémité de la rainure (39) se terminant par un chanfrein (37) qui est réalisé sur le bord intérieur périphérique d'une face frontale côté sortie de l'arbre creux (42).

8. Engrenage planétaire (10) selon la revendication 7,
dans lequel l'arbre creux (42) comprend, à partir d'un côté sortie, des évidements qui présentent de préférence un pourtour circulaire, lesquels évidements présentent un diamètre qui diminue en direction d'un côté entrée,
**caractérisé en ce que**
l'évidement côté sortie présente une rainure en forme de spirale (39) pratiquée dans la paroi intérieure de l'arbre creux (42).

9. Engrenage planétaire (10) selon la revendication 7 ou 8,
**caractérisé en ce que**
l'évidement côté entrée (101) se termine en forme de trou borgne dans l'autre porte-satellites (40).

10. Engrenage planétaire (10) selon la revendication 7, 8 ou 9,
**caractérisé en ce que**
qu'un dégagement ayant un diamètre supérieur aux diamètres des évidements adjacents est pratiqué entre les évidements respectifs dans l'arbre creux (42).

11. Engrenage planétaire (10) selon la revendication 7, 8, 9 ou 10,
**caractérisé en ce que**
les évidements et les dégagements forment ensemble un évidement non débouchant (101) dans l'autre porte-satellites (40).
